# EUROPEAN PATENT APPLICATION

(11) **EP 4 549 919 A1**
(43) Date of publication of application: **07.05.2025**
(21) Application number: 24208471.3
(22) Date of filing: 23.10.2024
(51) Int. Cl.: G01N 23/04, H01J 29/50, H01J 35/06, H05G 1/70

(54) **X-RAY INSPECTION SYSTEM FOR INSPECTION OF AN OBJECT**

(30) Priority: 06.11.2023 WO PCT/EP2023/080855
(71) Applicant: Carl Zeiss SMT GmbH, 73447 Oberkochen (DE)
(72) Inventor: Ruoff, Johannes, 73447 Oberkochen (DE)
(74) Representative: Rau, Schneck & Hübner Patentanwälte Rechtsanwälte PartGmbB

(57) **Abstract**

An X-ray inspection system (1) serves for inspection of an object (2). An X-ray source (9) of the system serves for generating X-rays to propagate through a region of interest (ROI, 10) of the object (2). An object mount holds the object (2) to be inspected such that the ROI (10) is accessible for the generated X-rays. A detection system (7a) serves to detect the X-rays after propagation through the ROI (10). The X-ray source (9) generates a plurality of separate X-ray light bundles (9ᵢ) to propagate through the ROI (10). Chief rays (16ᵢ) of at least two of the generated separate X-ray light bundles (9ᵢ) impinge on the ROI (10) of the object (2) with different chief ray illumination angles (CRAi). The detection system (7a) comprises separate detection areas to detect the separate X-ray light bundles (9ᵢ), respectively. An inspection system results enabling an inspection of an object with fast image data acquisition.

## Description

The contents of PCT patent application PCT/EP 2023/080 855 is incorporated by reference.

### TECHNICAL FIELD

The invention refers to an X-ray inspection system for inspection of an object.

### BACKGROUND

3D imaging of a sample structure by acquiring a set of 2D images of differently oriented sample planes is known in particular with respect to 3D X-ray imaging. In that respect, it is referred to Kasperl S., Hiller J., Krumm M., Computed tomography metrology in industrial research and development, Materials Testing, June 1, 2009;51(6):405-11 and to Körner, L., Lawes, S., Senin, N., Leach, R., Simulation of continuous high aspect ratio tomography for surface topography measurements, paper shown in DXCT 2019, Huddersfield. Further, respective projection systems and acquisition methods are known from Welkenhuyzen, F., Kiekens, K., Pierlet, M., Dewulf, W., Bleys, P. & Kruth, J.-P. and Voet, A., Industrial computer tomography for dimensional metrology: Overview of influence factors and improvement strategies, OPTIMESS 2009 or from Hsieh J., Computed tomography principles, design, artifacts, and recent advances, SPIE press, 2003. WO 2008/002132 A1 discloses a method and an apparatus for imaging. Further imaging optical arrangements to image an object illuminated by X-rays are known from US 7,057,187 B1, from US 7,130,375 B1 and from US 9,129,715 B2. Further, from DE 10 2018 209 570 A1 a method and a device to produce a three-dimensional image is known. US 2022/0178851 A1 discloses a high throughput 3D X-ray laminography imaging system using a transmission X-ray source. US 2011/0249795 A1 discloses an X-ray inspection method and an X-ray inspection apparatus. US 2015/110252 A1 discloses X-ray sources using linear accumulation. US 2022/0328277 A1 discloses a method and a device for producing and using multiple origins of X-radiation. US 2004/0240616 A1 discloses devices and methods for producing multiple X-ray beams from multiple locations.

### SUMMARY

It is an object of the present invention to enable an inspection of an object which as compared to 3D X-ray imaging devices of the prior art results in a faster image data acquisition.

This object is met by an X-ray inspection system having the features of claim 1.

According to the invention, a region of interest of the object to be inspected is illuminated simultaneously with X-ray light bundles impinging on the ROI with different chief illumination angles. As a result, with one and the same relative orientation and arrangement of the X-ray source to the object, a respective plurality of differently oriented sample planes may be imaged leading in effect to the possibility of a "one shot" 3D X-ray imaging of the object. The simultaneous illumination with X-ray bundles impinging on the ROI with different chief ray illumination angles can lead to a substantial increase in X-ray throughput.

A chief ray of a respective X-ray light bundle is a central ray within such X-ray light bundle. Such central ray, i.e. the chief ray, may impinge centrally on the respective detection area. The chief ray may impinge perpendicular on the respective detection area.

The number of differently generated X-ray light bundles may be in a range between 2 and 20, in particular between 2 and 10. In particular, the X-ray source may generate 2, 3, 4, 5 or more separate X-ray light bundles impinging on the ROI of the object with different chief illumination angles. In general, such number of generated separate X-ray light bundles impinging on the ROI of the object with different chief illumination angles may be smaller than 50.

Objects to be inspected may have several layers of interconnects and may include absorbing structures such as redistribution layers (RDLs) or metal pads.

Objects to be inspected may be multi-chip modules. In particular, whole wafers or printed circuit boards, i.e. objects having lateral dimensions of more than 100 mm and in particular up to 300 or 500 mm may be inspected.

The X-ray inspection system may be embodied as an X-ray laminography inspection system. The object mount of such X-ray inspection system may be embodied corresponding to a sample motion stage disclosed in US 2022/0178851 A1. The object mount may include in particular a rotary stage to rotate the object around an axis which in particular is perpendicular to an object surface.

Alternatively or in addition, the object mount may be embodied to pivot or rotate the object around another pivot or rotation axis.

Via the simultaneous illumination with X-ray light bundles impinging on the ROI with different chief ray illumination angles simultaneously different perspectives of one and the same ROI may be recorded during operation of the X-ray inspection system. In case the X-ray inspection system is embodied as an X-ray laminography imaging system, instead of a full 360° rotation of the object to obtain full inspection information, a half rotation (180°) of the object may be sufficient. Merging the information in particular obtained from two opposing chief ray illumination angles then delivers the full 360° image and in particular may deliver a full 3D image of the object. If more than two X-ray light bundles are used, in particular, if n X-ray light bundles are used, the rotation angle can be reduced to 360°/n.

An X-ray source according to claim 2 having separate electron beam sources leads to a high flexibility of the X-ray source. Each of the separate electron beams may be controlled independently. Each of the electron beam sources may have an own attributed electron beam acceleration unit.

The converting element may be a tungsten element.

An X-ray source according to claim 3 only needs a single electron beam source diminishing in that respect a complexity of the X-ray source. Each split partial electron beam may be equipped with its own acceleration unit. Alternatively, a common acceleration unit may be provided for all split partial electron beams.

With an X-ray source according to claim 4, the initially generated main electron beam is accelerated by an acceleration unit. With such an embodiment, different acceleration units provided for the split partial electron beams may be omitted. Alternatively, again each split partial electron beam may have its own acceleration unit.

An arrangement of the X-ray source regions according to claim 5 facilitates a subsequent guiding of the respectively generated X-ray light bundles to propagate through a region of interest.

An arrangement according to claim 6 may be beneficial with respect to space requirements of the X-ray source components. A center of such arrangement circles may define an illumination angle "0°". The X-ray source regions may be arranged on several circles having different circle radii.

An arrangement according to claim 7 has been proven to be of specific usability. Alternatively or in addition, at least some or all of the X-ray source regions may be arranged at different azimuthal angles on the respective circles.

An electron beam optics according to claim 8 increases a flexibility of a usability of the X-ray source. Different and in particular controllable chief illumination angles via which the separate X-ray light bundles impinge on the ROI of the object may be provided.

An aperture device according to claim 9 avoids an undesired crosstalk between the respective beam paths.

A plurality of detection devices according to claim 10 improves a flexibility of the X-ray detection of the inspection system.

This, in particular, holds true for an embodiment according to claim 11. The sensor array may be a CCD or a CMOS array.

The detection system may include a post-magnification unit. In particular, an optical system may be used to image a magnified image via visible photons which are emitted from a scintillator on which the X-rays impinge after propagation through the ROI. Possible embodiments for such a post-magnification detection are known from US 9,129,715 B2.

Chief ray illumination angles of the respective X-ray light bundles on the one hand and distances between the respective X-ray source regions and the detectors respectively attributed to these light bundles on the other may be chosen such that a geometrical magnification at all detectors of the detection system, in particular at all separate detection areas to detect the respective X-ray light bundle, is the same. In particular, in case all X-ray light bundles are emitted from sources which are arranged in a plane being parallel to an object plane, all detection areas or detectors being attributed to the respective X-ray light bundles being emitted from such X-ray sources also may be arranged in a plane parallel to such object plane. In particular, all detection areas, preferably all detectors may be arranged in exactly one plane.

In addition to chief rays of at least two of the generated separate X-ray light bundles which impinge on the ROI of the object with different polar chief ray illumination angles, chief rays of at least two of the generated separate X-ray light bundles may impinge on the ROI of the object with different azimuthal chief ray illumination angles.

As long as the separate X-ray light bundles impinge on the ROI of the object with equal polar chief ray illumination angles, the distance between a respective X-ray source region and an attributed detector may also be equal.

The separate detection areas or the separate detectors may be tilted such that the respectively attributed X-ray light bundle impinges on such detection area or detector with normal incidence. Alternatively, an incidence angle between a chief ray of the respective X-ray light bundle and the attributed detection area or detector may deviate from 0°. Such angle of incidence may be in a range between 0° and 60°, in particular in a range between 0° and 45° or in a range between 0° and 30°. Such incidence angle may be in a range between 0° and 7°.

In particular, it is possible to image object structures which are smaller than 20 µm, smaller than 10 µm and in particular which are smaller than 1 µm. Examples for such structures are Cu-Cu hybrid bonding structures between microchips and substrate conductor paths. In particular, direct bonds between single dies or between a whole wafer onto a substrate wafer can be inspected.

In particular, a 3D tomographic reconstruction of an object sample under investigation by combining several 2D images taken from different directions is possible.

X-ray energies of the used X-rays can range between 5 keV and 160 keV, preferably between 15 keV and 90 keV.

With the inspection system, in particular complex 3D IC semiconductor packages may be inspected.

### BRIEF DESCRIPTION OF DRAWINGS

Exemplified embodiments of the invention hereinafter are described with reference to the accompanying drawings. It is shown in
- Fig. 1: a schematic working principle of an X-ray inspection system for inspection of an object, embodied as a projection system for acquiring 3D tomographic images of semiconductor structure samples via acquiring a set of 2D images of differently oriented sample planes with a respective acquisition method;
- Fig. 2: in a sectional view according to the xy-plane in fig. 1 an embodiment of the X-ray inspection system having an X-ray source being embodied with a multi e-beam column, wherein the X-ray source comprises five X-ray source spots to generate five separate X-ray light bundles to impinge on a region of interest (ROI) of the object;
- Fig. 3: in a yz-view an example of a distribution of source spots of another embodiment of an X-ray source of the X-ray inspection system according to fig. 2;
- Fig. 4: in a view similar to fig. 3 another possible distribution of source spots of a respective embodiment of the X-ray source;
- Fig. 5: in a view similar to fig. 3 another possible distribution of source spots of a respective embodiment of the X-ray source;
- Fig. 6: in a view similar to fig. 3 another possible distribution of source spots of a respective embodiment of the X-ray source;
- Fig. 7: an embodiment of the X-ray source of the X-ray inspection system having a single e-beam emitter and having several separate e-beam acceleration units to generate separate X-ray light bundles to propagate through the ROI of the object in a side view;
- Fig. 8: in a view similar to fig. 7 another embodiment of an X-ray source having a single emitter multi e-beam source to generate a plurality of separate X-ray light bundles;
- Fig. 9: the embodiment of fig. 8 with another position of a multi aperture lenslet array to alter a location of e-beam foci of different e-beams generated by the source;
- Fig. 10: in a view similar to figs 7 to 9, another embodiment of an X-ray source generating a plurality of separate X-ray light bundles, the X-ray source having an array of multiple, separate single e-beam sources;
- Fig. 11: in a view similar to fig. 10, another X-ray source having an array of multiple, separate single beam sources with another beam optics to alter a location of beam foci of the generated electron beams.

### DETAILED DESCRIPTION

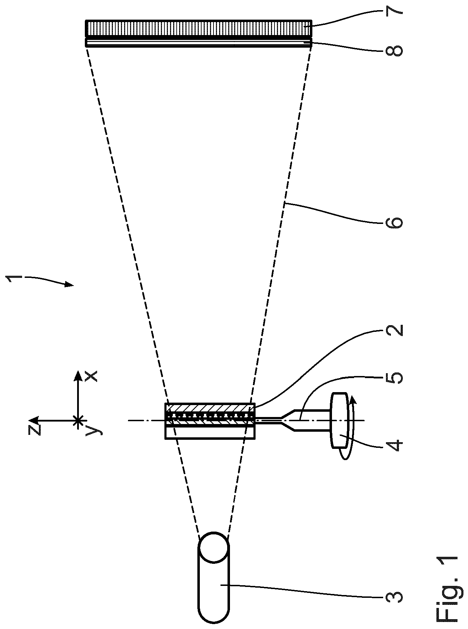

Fig. 1 shows schematically main components of an X-ray inspection system embodied as a projection system 1 for acquiring tomographic images of a sample or object 2 by acquiring a set of two-dimensional (2D) images of differently oriented sample planes.

The sample 2 in the shown embodiment is a semiconductor structure.

The projection system 1 comprises a projection light source 3. The projection light source 3 is embodied as an X-ray source.

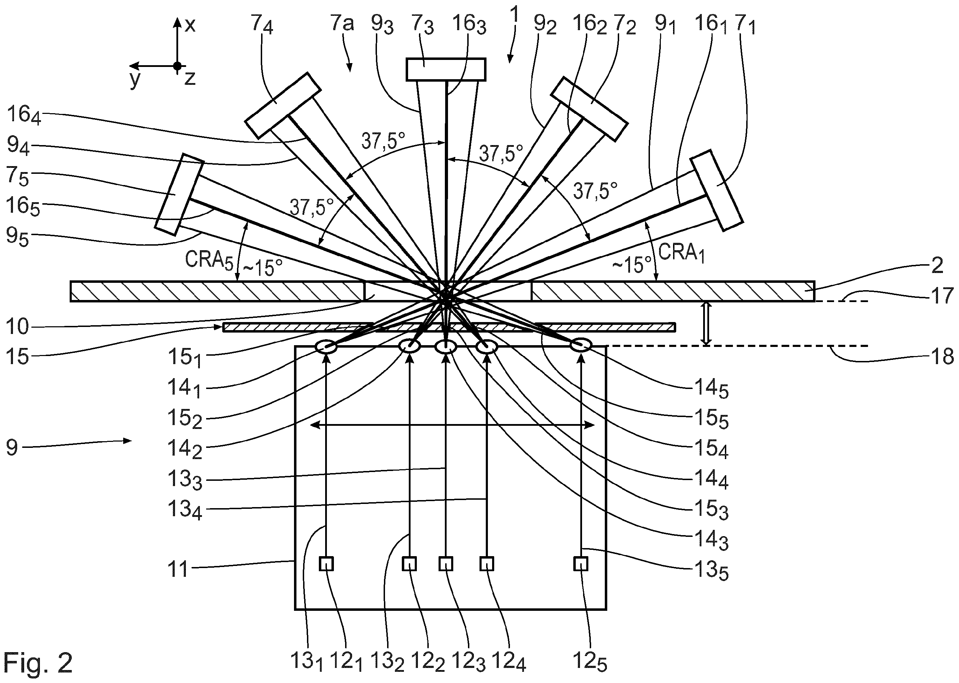

The sample 2 is held by a sample structure holder 4 which as an illustration of prior art is shown to be rotatable around at least one sample rotating axis 5. According to the invention described here, differently oriented sample planes which are required for 3D image acquirement, are produced different to a sample rotation as explained with respect to figs 2 et seq below.

To facilitate the description of the structures and their orientation, in the following a Cartesian xyz coordinate system is used. In fig. 1, the x-axis runs to the right. The y-axis runs perpendicular to the drawing plane of fig. 1 away from the viewer. The z-axis runs upwards in fig. 1.

The sample rotating axis 5 runs parallel to the z-axis.

The sample structure holder 4 holds the sample 2 in a light path 6 of the projection light generated by the projection light source 3.

In the light path 6 after the sample 2 a spatially resolving detector 7 is arranged which is embodied as a CCD or a CMOS detector. The detector 7 may include an optical post-magnification. A respective detector with optical post-magnification is known from US 9,129,715 B2.

A detection plane of the detector 7 is parallel to the yz-plane. The rotation axis 5 of the sample holder 4 runs parallel to such detection plane. Such sample structure holder 4 also is referred to as an object mount.

Between the sample 2 and the detector 7 and in the vicinity of the detector 7, a scintillator layer 8 is arranged in the light path 6. The scintillator layer 8 serves to convert a wavelength of the projection light into a wavelength detectable by the detector 7, in particular into a UV and/or visible wavelength.

The detector 7 together with the scintillator layer and possible further detection components is referred to herein after also as a detection system 7a.

Fig. 2 shows an embodiment of an X-ray source 9 to generate a plurality of separate X-ray light bundles 9₁ to 9₅ to propagate through a region of interest (ROI) 10 of the object 2.

The X-ray source 9 comprises a multi electron-beam (e-beam) column 11 having a plurality of separate electron beam sources 12₁ to 12 ₅ to generate respectively separate electron beams 13₁ to13₅. Further, the X-ray light source 9 includes a converting element attributed to the separate electron beam sources 13; to convert the generated electron beams 13; to separate X-source spots or regions 14₁ to 14s. The converting element may be embodied as a respective tungsten layer on an X-ray source body located at the respective X-ray source region 14ᵢ. The tungsten layer may include tungsten regions being embedded in a diamond substrate layer. Such diamond substrate layer provides an excellent heat conduction to dissipate a thermal load induced by the electron beams 13;. The converting element may be embodied as a continuous plate carrying respective tungsten layers at least at the position of the X-ray source regions 14ᵢ.

The X-ray light bundles 9; separately generated in the X-ray source regions 14; are defined with respect to their outer beam boundaries to propagate from the respective X-ray source region 14; through the region of interest 10 of the object 2. Such propagation definition is given by an aperture device 15 arranged in the beam path of the respective X-ray light bundle 9; between the X-ray source regions 14; and the object 2. The aperture device 15 is embodied as an aperture blade having aperture through-holes 15₁ to 15₅ for the passage of the respective X-ray light bundle 9₁ to 9₅.

The detection system 7a of the fig. 2 embodiment of the X-ray inspection system 1 comprises a plurality of spatially resolving detectors 7₁ to 7s. Each of those detectors 7ᵢ may be embodied as described above with respect to fig. 1. The respective detection device 7ᵢ defines a detection area to detect the respective X-ray light bundle 9ᵢ. The detectors 7ᵢ may be embodied as optically coupled detectors. A conversion of the X-ray wavelength to optical wavelengths may take place.

The detectors 7₁ to 7s are located in the beam path of the respective X-ray light bundles 9₁ to 9₅ after their passage through the ROI 10 of the object 2.

Chief rays 16₁ to 16₅ of the separate X-ray light bundles 9₁ to 9₅ impinge on the ROI 10 of the object 2 with different chief ray illumination angles CRAᵢ. In particular, these chief rays 16₁ to 16₅ exhibit different polar chief ray illumination angles CRAᵢ with respect to an object plane. The chief ray illumination angles CRA₁ and CRA₅ each are approximately 15°. An angle difference between chief ray angles CRAᵢ and CRAᵢ₊₁ is for i = 1 to 4 37,5° each.

As an alternative to such equispaced arrangements of the chief ray angles CRAᵢ, also a non-equispaced arrangement is possible. Chief ray angles CRAᵢ on the one hand, and distances between the respective X-ray source region 14; and the attributed detector 7ᵢ on the other may be in an alternative arrangement chosen such that a geometrical magnification at all detectors 7ᵢ is the same. Such geometrical magnification is determined by a projected width of the ROI 10 as seen by the X-ray light bundle 9; having a respective polar chief ray illumination angle CRAᵢ. Such projected width, for example, is largest for detector 7₃ (CRA₃ = 90°) requiring to enable an equalized geometrical magnification a relatively small distance between the detector 7₃ and the X-ray source region 14₃, and is smallest seen from detectors 7₁ and 7₅ (CRA₁ = CRA₅ = 15°) requiring a distance between the X-ray source regions 14₁, 14s, and the detectors 7₁, 7₅ which is, as compared to the detector 7₃ distance, larger. In other words, to cover a comparable surface area on the detectors 7ᵢ being the result of a respective impingement of the ROI 10 via the X-ray light bundles 9ᵢ having different chief ray illumination angles CRAᵢ, those detectors 7ᵢ assigned to X-ray light bundles 9ᵢ with small chief ray angles CRAᵢ have a larger distance to the ROI 10 and also to the respective X-ray source region 14ᵢ as compared to X-ray light bundles 9; having a larger chief ray illumination angle CRAᵢ. The more tilted the ROI 10 is seen by the respective X-ray light bundle 9ᵢ, the more distant the assigned detector 7ᵢ should be arranged to achieve the same geometrical magnification of the ROI 10.

The chief ray 16₃ impinges on the region of interest 10 of the object 2 with normal incidence to the object plane 17 which runs parallel to the yz-plane.

The five different columns of the multi e-beam column (i = 1 to 5) 11 each have an electron acceleration unit not shown in detail in Fig. 2.

Such acceleration unit may be embodied as a common electron acceleration unit for all of such columns of the multi e-beam column 11. Alternatively, each column (i = 1 to 5) may have its own electron acceleration unit within the multi e-beam column 11.

In the fig. 2 embodiment, the X-ray source regions 14; are arranged in an arrangement plane 18 which runs parallel to object plane 17. In particular, the X-ray source regions 14; may be arranged along a line within such arrangement plane 18. Such line may be parallel to the y-direction.

The arrangement plane 18 also is referred to as source plane and defines a source plane of the respective X-ray source of the X-ray inspection system embodiment.

The detectors 7ᵢ may be arranged in the vertical plane according to figure 2 in a half circle.

In a different configuration as shown in figure 2, all detectors 7ᵢ may be arranged in exactly one plane. Such arrangement plane may be parallel to the object plane 17.

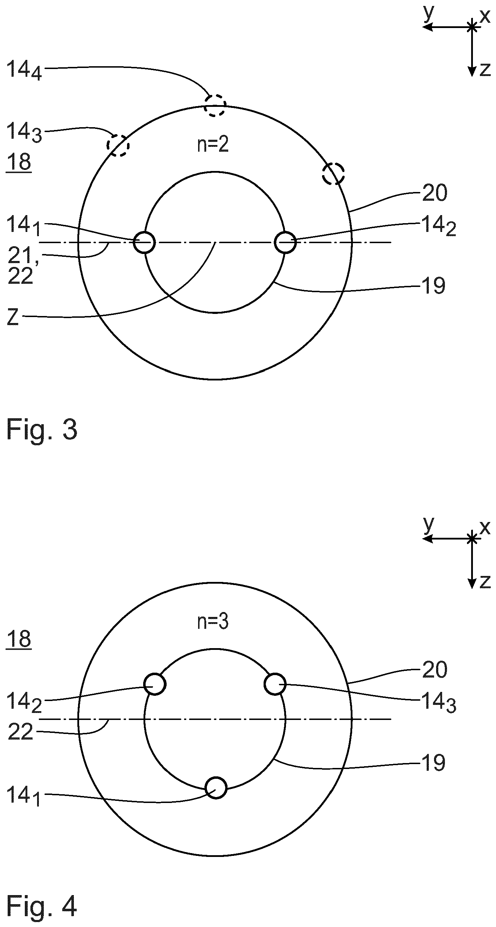

Fig. 3 shows another possible arrangement of X-ray source regions 14; in the arrangement plane 18. Shown are two X-ray source regions 14₁, 14₂ which both are arranged on an inner arrangement circle 19, such inner arrangement circle 19 being defined by a center Z. These two X-ray source regions 14₁, 14₂ define a same polar chief ray angle, but define different azimuthal chief ray angles with respect to the object plane 17. A y-distance between the X-ray source regions 14₁, 14₂ in the fig. 3 embodiment may be equal to the y-separation between the X-ray source regions 14₂ and 14₄ in the fig. 2 embodiment. Further, on an outer arrangement circle 20 defining another polar chief ray angle, further X-ray source regions 14₃, ... may be arranged, in particular along a line 21 parallel to the y-direction defined by the two X-ray source regions 14₁, 14₂ or as indicated with dashed circles on such outer arrangement circle 20, at different circle positions (different azimuthal angles) not coinciding with such line 21. Distances between X-ray source regions 14; exhibiting the same polar chief ray angle may be attributed to detectors 7ᵢ having the same distance to such X-ray source region 14ᵢ.

The arrangement of n source spots on a single circle helps to increase the throughput by a factor of n, since instead of a full rotation (360°) of the sample only the fraction 360°/n is needed to reach the same number of projections. If several source spots are arranged on a single circle, those detection areas or detectors being assigned to the respective source spot also can be arranged on a single circle. If source spots are arranged on different circles, this can help to increase image quality, since different polar angles can be used for the reconstruction. During a scan, both the radii of the source spots 14; as well as the positions of the detector 7ᵢ might be changed in order to cover a broader angular spectrum.

Fig. 4 shows in a view similar to fig. 3 an arrangement of three X-ray source regions 14₁, 14₂, 14₃ which, in this case, are equidistantly arranged on the inner arrangement circle 19. With respect to a vertical xy-plane 2, these three X-ray source regions 14₁ to 14₃ in fig. 4 all are arranged out of plane. This contrasts to the fig. 3 arrangement, where the X-ray source regions 14₁, 14₂ are arranged in plane. A particular arrangement of the source spots 14; may follow from a requirement to evenly distribute n spots on a respective circle. Dependent on the respective embodiment, an absolute orientation within a coordinate system may not be relevant.

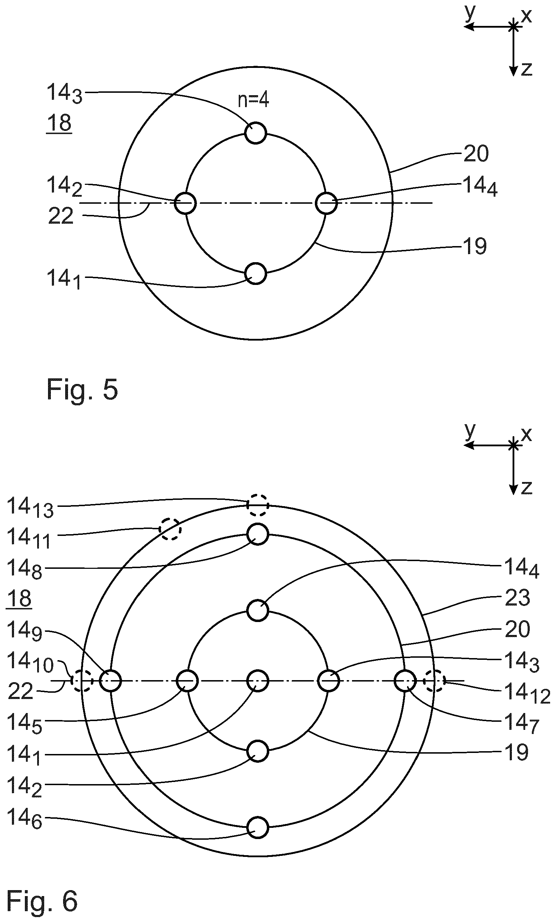

Another arrangement embodiment of the X-ray source regions 14; is shown in fig. 5, here in the exemplified case of four X-ray source regions 14₁ to 14₄. Here, all of the X-ray source regions 14₁ to 14₄ are arranged equidistantly on the inner arrangement circle 19.

Fig. 6 shows a further embodiment with another variant of an arrangement of X-ray source regions 14;. In the fig. 6 embodiment, nine X-ray source regions 14₁ to 14₉ are depicted with solid lines. A first X-ray source region 14₁ is located in a center of the concentric inner and outer arrangement circles 19, 20. Such central X-ray source region 14₁ has the same coordinates in y- and in z-direction as a center of the region of interest 10. This central X-ray source region 14₁ also may be omitted. Four further X-ray source regions 14₂ to 14₅ are arranged similar to the X-ray source region arrangement of fig. 5 equidistantly on the inner arrangement circle 19.

Four further X-ray source regions 14₆ to 14₉ also are arranged equidistantly, but now on a first outer arrangement circle 20. X-ray source regions 14₆, 14₂,14₁, 14₄, 14₈ are arranged in line on a line parallel to the z-axis. X-ray source regions 14₉, 14₅, 14₁, 14₃ and 14₇ are arranged in line on a line parallel to the y-axis. Such in-line y-arrangement is similar to that shown in fig. 2.

In addition, further X-ray source regions 14₁₀, ... may be arranged on a further outer arrangement circle 23 which also is concentric to the arrangement circles 19 and 20 and has the largest radius. Such further X-ray source regions 14ᵢ are shown with broken lines in fig. 6. These further X-ray source regions may be also positioned in an in-line configuration (same azimuthal angles, different polar angles) as exemplified by X-ray source regions 14₁₀, 14₁₂, and 14₁₃, but also may be arranged off-line (different azimuthal angles, same or different polar angles), as shown with X-ray source region and 14n. In particular, such further X-ray source regions 14₁₀, ... could be all arranged in an in-line configuration.

The X-ray source regions 14₂ to 14s on the one hand and 14₆ to 14₉ on the other are arranged at the same polar angles, respectively, on the respective arrangement circles 19 and 20.

X-ray source region 14ᵢ arrangements of various further kinds also are conceivable. With such further configurations, all X-ray source regions 14ᵢ may be located on an own circle, i.e. no pair of X-ray source regions 14ᵢ, 14ⱼ is located on the same arrangement circle.

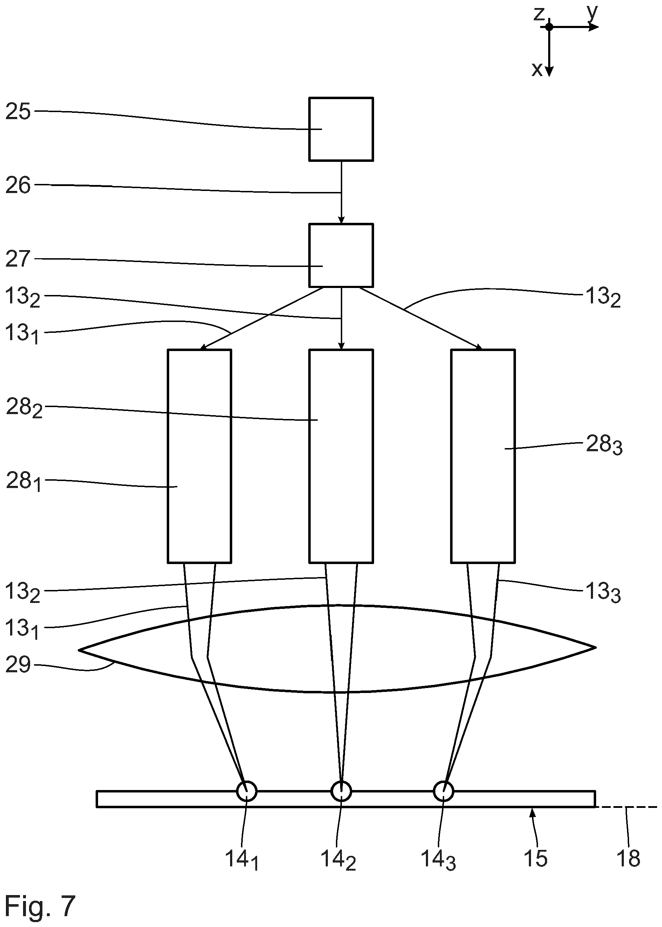

Fig. 7 shows a further embodiment of an X-ray source 24 which may be used in the X-ray inspection system 1 instead of the X-ray source 9. Components and functions which already were discussed with respect to figs 1 to 6 above show the same reference numerals and are not discussed in detail again. Further, an embodiment of an X-ray source is possible, wherein such X-ray source consists of n electron beam emitters and each beam gets split into m beamlets thus yielding a total of n x m beamlets.

The X-ray source 24 has a single electron beam source 25 to generate a main electron beam 26 and a subsequent electron beam splitting unit 27 to split the main electron beam 26 into a plurality of separate partial electron beams 13₁, 13₂, 13₃. Subsequently to the electron beam splitting unit 27, the separate partial electron beams 13; are accelerated via respective acceleration units 28₁, 28₂, and 28₃. Subsequently, the accelerated electron beams 13; are further conditioned regarding their direction towards the arrangement plane 18 and regarding their focal position with a focusing and beam steering unit 29. Such unit 29 in fig. 7 is depicted as a single unit and is schematically shown as a single lens. Alternatively, each of the accelerated partial electron beams 13; may have its own, separate focusing and beam steering unit 29ᵢ. Further, the beam steering unit 29 may include several separate sub-units arranged along a respective beam path of the electron beams 13ᵢ.

With the focusing and beam steering unit 29, positions of the respective X-ray source regions 14; at the arrangement plane 18 can be adjusted and controlled. Using a respective number of separate electron beams 13; split via a respective embodiment of the electron beam splitting unit 27, a corresponding number of X-ray source regions 14; can be generated, in particular in one of the source region arrangements discussed above with respect to figs 2 to 6.

At the arrangement plane 18, the electrons of the electron beams 13; again are converted to X-rays using a respectively attributed converting element, in particular made of tungsten.

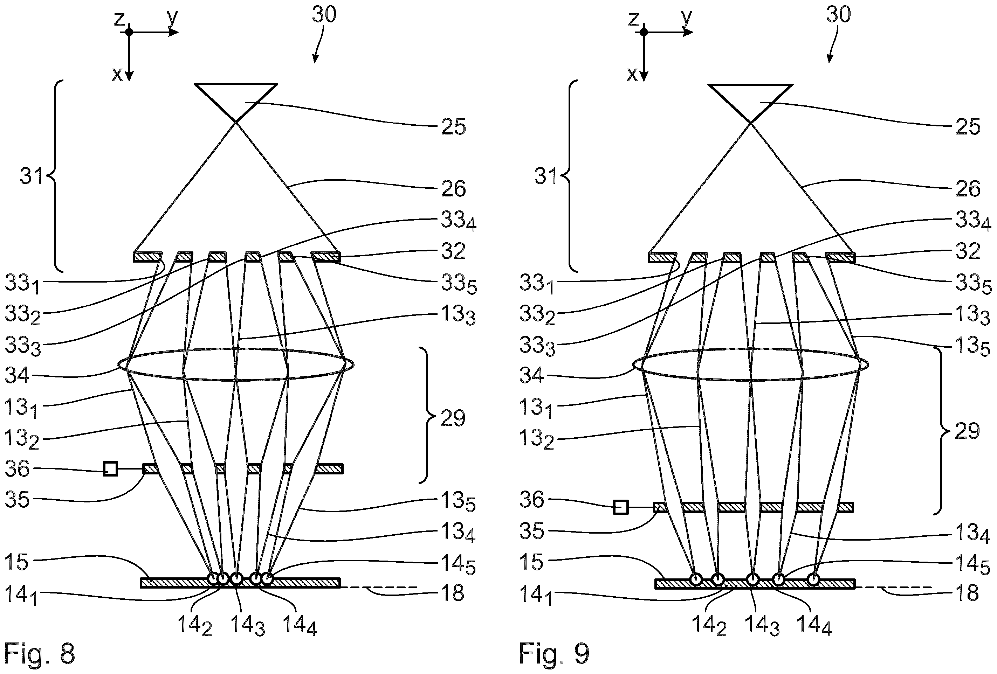

Fig. 8 shows a further embodiment of an X-ray source 30 which may be used in the X-ray inspection system 1 instead of the X-ray source 24. Components and functions which already were discussed with respect to figs 1 to 7 above show the same reference numerals and are not discussed in detail again.

In the X-ray source 30, functions of an electron beam splitting unit 27 and of an acceleration unit 28 are combined within a single emitter multi beam source 31. Such single emitter multi beam source 31 comprises the single electron beam source 25 and further comprises a multi aperture lenslet array 32 which serves to accelerate the electrons generated by the electron source 25 and which further has a plurality of aperture openings 33₁ to 33₅ for the passage of in this way generated separate partial electron beams 13ᵢ.

The multi aperture lenslet array 32 serves in particular as an acceleration unit to accelerate and to split the main electron beam 26 into the separate partial electron beams 13₁ to 13₅.

The multi aperture lenslet array 32 may be part of an electron beam optics to focus and/or to steer directions of separate paths of the respective electron beams 13;.

A macro lens 34 and a further multi aperture lenslet array 35 in a subsequent beam path of the separate partial electron beams 13; serve to condition propagation directions and/or focusing points of the respective separate partial electron beam 13; comparable to the focusing and beam steering unit 29 of the X-ray source 24 of fig. 7.

Via a drive unit 36, the multi aperture lenslet array 35 can be moved along a x-direction, i.e. perpendicular to the arrangement plane 18.

Figs 8 and 9 show two different x-positions of the multi aperture lenslet array 35. In the x-position of the multi aperture lenslet array 35 shown in fig. 8, such array 35 has a larger distance to the arrangement plane 18 as compared to fig. 9.

In the fig. 8 position of the multi aperture lenslet array 35, this results in an arrangement of the X-ray source region 14₁ to 14s which have a closer distance to each other.

In the fig. 9 x-position, the multi aperture lenslet array 35 is driven to be positioned more closely to the arrangement plane 18 resulting in an arrangement of the X-ray source regions 14; which are, as compared to fig. 8, more distant to each other.

Again, with the focusing and beam steering unit 29 of the X-ray source 30 comprising the macro lens 34 and the multi aperture lenslet array 35, arrangements of the X-ray source regions 14; are possible, dependent on the number of generated separate partial electron beams 14ᵢ, which are discussed above with respect, in particular, to figs 2 to 7.

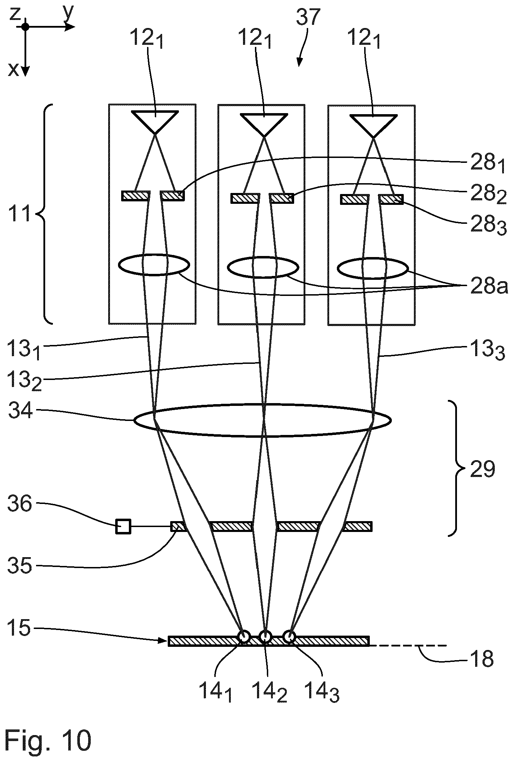

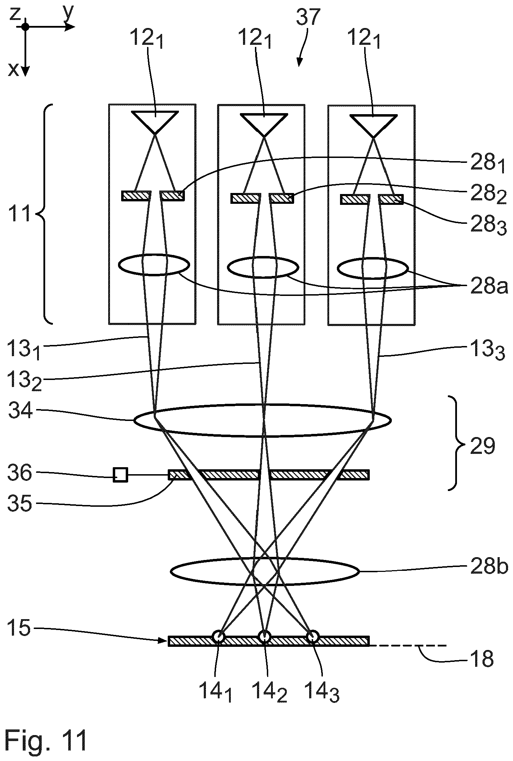

Figs 10 and 11 show another embodiment of an X-ray source 37 which may be used in the X-ray inspection system 1 instead of the X-ray source 30. Components and functions which already were discussed with respect to figs 1 to 7 above show the same reference numerals and are not discussed in detail again.

The X-ray source 37 has a plurality of electron beam sources 12₁, 12₂ and 12₃ with attributed acceleration units 28; serving to accelerate a respective one of the separate electron beams 13; generated by the electron beam sources 12;. Together with the electron beam sources 12ᵢ and a further electron beam focusing unit (schematically depicted lenses 28a), the acceleration unit 28; constitute a multi e-beam column 11 comparable to that of the embodiment of fig. 2.

Each of the acceleration units 28; comprises a single aperture lenslet.

In the beam path subsequent to the multi e-beam column 11 of the X-ray source 37, again, a focusing and beam steering unit 29 comparable to that of the embodiment of figs 8 and 9 is arranged comprising a macro lens 34 and a driven multi aperture lenslet array 35.

Figs 10 and 11 exemplify two focusing and beam steering positions of the focusing and beam steering unit 29 of the X-ray source 37.

In the position of fig. 10, closely spaced X-ray source regions 14₁, 14₂, and 14₃ result comparable to the spacing shown in the five beam embodiment of fig. 8.

In the further focusing and beam steering position of the focusing and beam steering unit 29 shown in fig. 11 with the multi aperture lenslet array 35 translated along the x-direction, the respective separate electron beams 13; cross each other in a beam crossing region 38.

In a further embodiment based on the fig. 11 x-ray source 37, the multi aperture lenslet array 35 is omitted and the function of such lenslet array is taken over by another lens 28b which schematically is depicted in fig. 11. In the embodiment of the x-ray source 37 having the multi aperture lenslet array 35, such lens 28b may be omitted.

Regarding focusing and beam steering means, concepts may be used which are known from WO 2008/002132 A1.

## Claims

1. An X-ray inspection system (1) for inspection of an object (2), the inspection system (1) comprising:
- an X-ray source (9; 24; 30; 37) for generating X-rays to propagate through a region of interest (ROI, 10) of the object (2),
- an object mount (4) to hold the object (2) to be inspected such that the ROI (10) is accessible for the generated X-rays,
- a detection system (7a) to detect the X-rays after propagation through the ROI (10),
- wherein the X-ray source (9; 24; 30; 37) generates a plurality of separate X-ray light bundles (9ᵢ) to propagate through the ROI (10),
- wherein chief rays (16ᵢ) of at least two of the generated separate X-ray light bundles (9ᵢ) impinge on the ROI (10) of the object (2) with different chief ray illumination angles (CRAi),
- wherein the detection system (7a) comprises separate detection areas to detect the separate X-ray light bundles (9ᵢ), respectively,
- wherein the X-ray inspection system is embodied such that the ROI (10) of the object (2) to be inspected is illuminated simultaneously with X-ray light bundles (9ᵢ) impinging on the ROI (10) with different chief illumination angles (CRAi).

2. The X-ray inspection system according to claim 1, wherein the X-ray source (9; 37) comprises a plurality of separate electron beam sources (12ᵢ) with an attributed converting element to convert the generated electron beams at separate X-ray source regions (14ᵢ) into X-rays.

3. The X-ray inspection system according to claim 1, wherein the X-ray source (24; 30) comprises a single electron beam source (25) to generate a main electron beam (26), an electron beam splitting unit (27; 32) to split the main electron beam (26) into a plurality of separate partial electron beams (13ᵢ) and an attributed converting element to convert the generated partial electron beams at separate X-ray source regions (14ᵢ) into X-rays.

4. The X-ray inspection system according to claim 1, wherein the X-ray source (30) comprises
- a single electron beam source (25) to generate a main electron beam (26)
- an acceleration unit (32) to accelerate and to split the main electron beam (26) into a plurality of separate partial electron beams (13ᵢ) and
- an attributed converting element to convert the generated partial electron beams (13ᵢ) at separate X-ray source regions (14ᵢ) into X-rays.

5. The X-ray inspection system according to one of claims 2 to 4 wherein the X-ray source regions (14ᵢ) are arranged in a source plane (18) of the inspection system (1).

6. The X-ray inspection system according to claim 5, wherein several X-ray source regions (14ᵢ) are arranged on at least one circle (19; 19, 20; 19, 20, 23) in the source plane (18).

7. The X-ray inspection system according to claim 6, wherein several X-ray source regions (14ᵢ) are arranged on several circles (19, 20; 19, 20, 23) in the source plane (18) with different radii and the X-ray source regions (14ᵢ) on different circles (19, 20; 19, 20, 23) are arranged at same polar angles on the respective circle (19, 20; 19, 20, 23).

8. The X-ray inspection system according to one of claims 2 to 7, comprising an electron beam optics (29; 34, 35; 32, 34, 35) in an electron beam path of the electron beams (13ᵢ) upwards the X-ray source regions (14ᵢ) to focus and/or to steer a direction of the separate paths of the respective electron beams (13ᵢ).

9. The X-ray inspection system according to one of claims 1 to 8, comprising an aperture device (15) arranged in a beam path between the X-ray source region (14ᵢ) and the region of interest (10).

10. The X-ray inspection system according to one of claims 1 to 9, wherein the detection system (7a) comprises a plurality of detection devices (7ᵢ) and each of the detection devices (7ᵢ) is attributed to a separate X-ray light bundle (9ᵢ).

11. The X-ray inspection system according to claim 10, wherein each of the detection devices (7ᵢ) comprises a sensor array.

12. The X-ray inspection system according to one of claims 1 to 11, wherein the detection system (7a) includes a post-magnification unit.
